# EUROPEAN PATENT SPECIFICATION

(11) **EP 4 418 965 B1**
(45) Date of publication and mention of the grant of the patent: **12.11.2025**
(21) Application number: 22802743.9
(22) Date of filing: 18.10.2022
(51) Int. Cl.: A47J 31/44, A47J 31/42

(54) **MACHINE AND METHOD FOR PREPARING COFFEE BEVERAGES**
MASCHINE UND VERFAHREN ZUR ZUBEREITUNG VON KAFFEEGETRÄNKEN
MACHINE ET PROCÉDÉ DE PRÉPARATION DE BOISSONS À BASE DE CAFÉ

(30) Priority: 19.10.2021 IT 202100026711
(43) Date of publication of application: 28.08.2024
(73) Proprietor: De' Longhi Appliances S.r.l. Con Unico Socio, 31100 Treviso (IT)
(72) Inventor: ROSETTA, Simone, 31100 Treviso (IT); QUARATESI, Guido, 31100 Treviso (IT); MARCATO, Emanuele, 31100 Treviso (IT)
(74) Representative: Petraz, Gilberto Luigi
(86) International application number: PCT/IT2022/050278
(87) International publication number: WO 2023/067637

(56) References cited:
- EP-A2- 2 364 624
- WO-A1-2004/098361
- WO-A1-2010/095937
- WO-A1-2018/195796
- KR-B1- 102 070 509

## Description

### FIELD OF THE INVENTION

The present invention concerns a machine for preparing coffee beverages provided with a container for the coffee, of the removable type, and the corresponding method which allows to optimize the preparation of the beverage in relation to the type of coffee beans or powder contained in said container.

### BACKGROUND OF THE INVENTION

Machines for preparing coffee beverages are known, which are provided with a brewing chamber into which a certain quantity of coffee powder to be brewed is fed on each occasion.

The machine can be associated with a hopper, or a container, suitable to contain either coffee beans to be fed to a grinding device, or already ground coffee powder which can be fed directly to the brewing chamber.

The hopper can be of the removable type and generally, when it is associated with the machine, a microswitch is activated that recognizes its presence, so as to allow the grinding device to be activated.

It is also known that the preparation of a coffee beverage requires a plurality of different extraction parameters to be set and controlled, which often also depend on the type of coffee used, in particular on the type of coffee beans, that is, origin, level of roasting and proportions of different varieties in a blend.

Furthermore, the tendency of consumers to try and change different types of coffee, each of which has its own organoleptic characteristics and therefore requires specific extraction parameters, is becoming more and more widespread. This entails having to modify the respective extraction parameters of the machine every time the bean type is changed in order to obtain a coffee with high quality characteristics. This can be burdensome for the user at least in terms of time.

Document WO2010/095937A1 describes a known solution of a machine for preparing coffee beverages to which disposable packaging cartridges containing coffee beans can be removably connected. The cartridges are of the disposable type and include respective identification codes on the packaging, by means of which the machine can receive information about them or their contents and set respective brewing parameters.

Documents WO2018/195796A1 and EP2364624A2 also describe respective machines for preparing beverages that use removable containers of the disposable type for the coffee beans, which are provided with identification codes containing pre-set information regarding the type of beans contained in them, and the machines can set the brewing parameters based on this information.

Providing disposable cartridges, however, determines an increase in their production costs, as well as an increase in the material that has to be disposed of, since each cartridge, in addition to the packaging itself, must also comprise means for coupling with the machine.

Document WO2004/098361A1 describes a machine for preparing beverages comprising a hopper on which an identification device is provided by means of which the machine can recognize its presence, and which can contain information regarding the type of coffee beans contained therein.

There is therefore a need to perfect a machine and a method for preparing a coffee beverage which can overcome at least one of the disadvantages of the state of the art.

In order to do this, it is necessary to solve the technical problem of providing a machine for preparing coffee beverages that is able to independently select and set the extraction parameters in association with a specific type of coffee bean contained in a specific container.

Another purpose of the present invention is to provide a machine for preparing coffee beverages which allows to change the type of coffee beans to be used quickly and frequently, without requiring burdensome setting operations.

Yet another purpose of the present invention is to provide a machine that is simple to use.

Another purpose is also to provide a machine for preparing coffee beverages which allows to dynamically modify and update the extraction parameters associated with a container.

Another purpose of the present invention is to perfect a method for delivering a coffee beverage which allows to automatically select the extraction parameters to be used on each occasion for a given type of coffee bean, and possibly also to automatically set them.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, and to resolve the technical problem disclosed above in a new and original way, also achieving considerable advantages compared to the state of the prior art, a machine for preparing coffee beverages comprises a plurality of containers suitable to each contain a certain type of coffee beans, each container being able to be selectively associated with the machine, and in particular coupled and connected to a same housing seating.

By "type of coffee beans" we generally mean one or more characteristics including the origin of the beans, level of roasting, percentage of beans with different origins or their size.

The containers in question are of the reusable type, that is, once the beans contained therein are finished, they can be filled again with the same or a different type of coffee beans.

Each container is provided with its own identification means and the machine is provided with recognition means configured to interact with the identification means and recognize the container associated with it on each occasion.

In particular, each container, or each of the identification means associated therewith, can be associated with a certain profile of extraction parameters.

The profile of extraction parameters is correlated at least to the type of coffee beans contained in the specific container. The parameter profile can also be correlated to other variables, such as the preferences of a specific user for example.

The machine comprises a control unit configured to receive an identification signal from the recognition means and to automatically select the operating parameters of the machine as a function of the signal received and of the extraction parameters associated with the recognized container.

The machine comprises a user interface communicating with the control unit and configured to make a bijective association between each of the containers and a certain profile of extraction parameters.

In this way it is possible to dynamically associate a specific profile with a specific container on each occasion, and this association can be repeated and updated whenever a user wishes, for example when the container is filled with a type of coffee beans that differs from the first, or even to customize the extraction profile associated with a container.

The control unit can also be configured to directly and autonomously set the operating parameters selected.

Alternatively, it can be provided that the control unit can set the operating parameters selected following the receipt of a confirmation from a user by means of the interface.

According to some embodiments, through the user interface communicating with the control unit, a bijective association can in particular be made between the identification means of a container and the type of coffee beans present therein, and consequently with the respective extraction parameters.

The associations between container - type of coffee beans - extraction parameters can be stored in a memory unit connected to the control unit, for example a local memory or a cloud memory, so that on each occasion it is possible to automatically select, and possibly also set, the correct extraction parameters upon recognition of a specific container.

According to some embodiments, the user interface can be made on board the machine.

According to other variants, the user interface can be provided on an electronic device separate from the machine, such as for example a mobile phone of the smartphone type, a PC or a tablet on which a dedicated software application can be installed.

According to one aspect of the present invention, once the type of coffee beans has been defined, the respective extraction parameters of the machine can be determined automatically on the basis of predefined profiles stored in the memory unit, or possibly entered manually by a user through the user interface.

According to some embodiments, a plurality of profiles can be stored in the memory unit, each comprising its own set of extraction parameters associated with a certain type of coffee beans or a combination of variety/roasting of the coffee beans.

Each set can comprise one or more extraction parameters or even expected values of one or more reference parameters, which are correlated to the extraction parameter/s and directly dependent on them, which, if respected, allow to obtain a quality beverage.

In particular, once a bijective correlation has been made between the coffee beans contained in a certain container, and the extraction parameters associated with them have been defined, every time the container is replaced the machine can automatically and rapidly adapt its operating parameters without additional interventions by the user, automatically adjusting its own brewing and/or grinding means in order to make them operate according to the extraction parameters provided for the particular type of coffee beans.

Thanks to this solution, a user can therefore replace the coffee beans container frequently, possibly even each time a beverage is prepared, always obtaining a quality beverage without having to make manual adjustments or having to set one or more extraction parameters.

According to some embodiments, the control unit can also be provided with a neural network, or with other processing means, which can be configured to receive and process the commands received from a user during the use of a specific container, and condition the operation of the machine and/or adjust the operating parameters of the profile associated with such container as a function of the commands received. In this way, it is possible to associate a specific container, or its identification means, not only with a certain type of beans, but also with a specific user.

This therefore allows not only to automatically set the extraction parameters in relation to the type of coffee beans, but also to set the parameters, or modify the operation of the machine, as a function of the preferences of a user.

According to other embodiments, it can therefore be provided that different profiles are stored for a certain type of coffee beans, possibly modified and stored according to the preferences of a user, and that the control unit is configured to select on each occasion the suitable profile associated with the container recognized by means of the respective identification means and recognition means. In this way, the same type of coffee beans contained in different containers can be associated with a different profile and therefore with different operating parameters.

According to some embodiments, the identification means and the recognition means can be of the mechanical type. According to this embodiment, the identification means can comprise an activator member associated with each container in a certain position, possibly different on one container with respect to another, and the recognition means can comprise a plurality of actuators, each one able to be activated by a certain activator member.

According to some embodiments, the identification means and the recognition means can comprise an emitter and a receiver, respectively, suitable to communicate with each other in wireless mode. The emitter and receiver can, for example, communicate by means of RFID (Radio Frequency Identification) technology.

According to other variants, a bar code or a QR code can be provided on each container and a receiver suitable to read such code can be provided in a seating of the machine.

These solutions allow to substantially recognize an infinite number of hoppers, and therefore an infinite number of types of coffee beans.

According to other embodiments, each container can comprise at least one surface portion having its own color and the recognition means can comprise an optical device suitable to recognize the color of the container or of a portion thereof.

The present invention also concerns a method for preparing a coffee beverage which provides to:
- make available one or more containers of the removable type, each containing a type of coffee beans, and each provided with its own identification means;
- define a bijective association between each of the containers and a respective profile of extraction parameters of the machine which is correlated at least to the type of coffee beans contained in each container;
- recognize the container coupled on each occasion to the machine by means of recognition means suitable to interact with the identification means;
- automatically select and set the operating parameters of the machine as a function of the extraction parameters of the profile associated with the container.

The operating parameters of the machine can be set automatically by the control unit, independently or following the receipt of a confirmation command from a user. In the latter case, it can also be provided that the user can modify at least one operating parameter according to his/her preferences, possibly within a predefined range, so as not to compromise the quality of the beverages prepared.

Once the automatic setting of the operating parameters has been carried out, the machine can continue to operate with such setting until the coffee bean container is removed and then reinserted or replaced with another container. In any case, the steps of recognizing the container and subsequent automatic setting of the operating parameters will be repeated.

According to some embodiments, in order to recognize the containers, the method according to the invention provides to receive an identification signal by means of one of a plurality of actuators activated on each occasion by an activator member of a specific container when the latter is coupled to the machine.

According to one variant, the method provides to recognize the containers by reading a bar code or a QR code disposed on the container by means of a receiver provided in a housing seating of the machine.

According to another variant, the method provides to identify a specific color of the container, or at least of an identification portion thereof, by means of a suitable optical device.

According to another aspect of the invention, the step of bijective association between the container, and therefore its identification means, and a profile of extraction parameters provides to receive, by means of a user interface, an indication of a type of coffee beans and possibly of their degree of roasting, and to select, from a plurality of stored extraction parameter profiles, the one associated with that type of coffee beans.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a schematic view of a machine for preparing coffee beverages according to some embodiments described here;
- fig. 2 is a partial schematic view of a detail of the machine of fig. 1;
- fig. 3 is a schematic top view partly sectioned along the plane π of fig. 2 in accordance with a first variant;
- fig. 4 is a schematic section view of a detail of the machine of fig. 1 in accordance with the first variant;
- fig. 5 is a schematic section view of a detail of a machine according to the invention in accordance with a second variant;
- fig. 6 is a schematic section view of a detail of a machine according to the invention in accordance with a second variant.

We must clarify that in the present description the phraseology and terminology used, as well as the figures in the attached drawings also as described, have the sole function of better illustrating and explaining the present invention, their function being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS OF THE PRESENT INVENTION

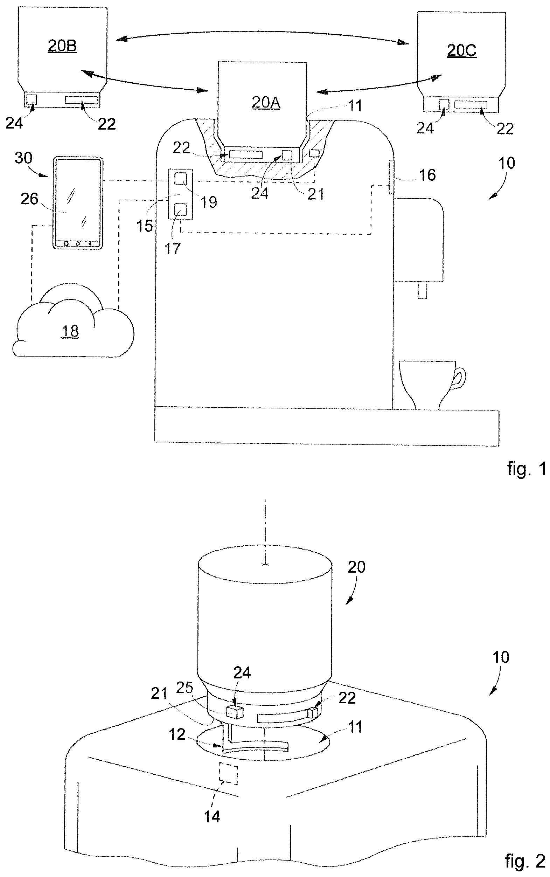

With reference to fig. 1, there is described a machine 10 for preparing coffee beverages according to the present invention.

The machine 10 comprises in a known way means for grinding coffee beans and brewing means, not shown.

According to one aspect of the present invention, the machine 10 comprises a plurality of containers 20 suitable to contain certain types of coffee beans, each container being able to be selectively associated with a same housing seating 11 of the machine 10.

Fig. 1 shows by way of example three containers 20, indicated respectively with the reference numbers 20A, 20B, 20C; however, their number can also be higher or lower.

Each container 20 can be closed at the bottom by means of a closing bottom 21 provided with at least one aperture able to be selectively opened and closed, for example through the reciprocal rotation between the container 20 and the closing bottom 21.

The containers 20 and the seating 11 are provided with respective coupling members 22, 12 configured to cooperate reciprocally and guarantee a stable clamping of the container 20.

The coupling members 22, 12 can also be conformed in such a way as to simultaneously allow both to clamp the container 20 in the seating 11 and also to rotate the closing bottom 21 in order to open the aperture, allowing the transit of the coffee beans.

By way of example, the coupling members can comprise a shaped groove 12 created in the seating 11 and a flap 22 provided on a lower portion of the container 20 which is suitable to be inserted and clamped in the groove 12.

All containers 20 are preferably provided with coupling members 22 identical to each other, or in any case suitable to cooperate with the same coupling members 12 of the same seating 11.

Each container 20 is provided with its own identification means 24, and the machine 10 is provided with recognition means 14 configured to interact with the identification means 24 and recognize the container 20 used on each occasion.

The machine 10 comprises a control unit 15 which is configured to receive a signal from the recognition means 14 which identifies a certain container 20 containing a certain type of coffee beans contained therein, and to automatically select and set the extraction parameters of the machine 10 as a function of the identification signal received.

The control unit 15, once a container 20 has been identified, can set the operation of the various components of the machine 10 on the basis of the extraction operating parameters selected.

According to possible variants, the control unit 15 can set the operation of the various components of the machine 10 directly, or following the receipt of a confirmation command from a user.

According to some embodiments, the profile associated with each container 20 comprises the optimum extraction parameters provided for the certain type of coffee beans contained in the container 20 identified on each occasion.

The machine 10 comprises a user interface 16 communicating with the control unit 15, through which a bijective association can be made between each container 20 and a certain profile of extraction parameters.

In particular, by means of the user interface 16 it is possible to make a bijective association between the identification means 24 of a container 20 and at least the type of coffee beans present therein, and therefore with the respective extraction parameters.

The associations between container - type of coffee beans - extraction parameters can be stored in a memory unit 17, 18 connected to the control unit 15, so that on each occasion it is possible to automatically set the correct extraction parameters upon recognition of a specific container 20.

The memory unit 17 can be physically provided on board the machine, or it can be created as a cloud-type platform 18 communicating wirelessly with the control unit 15, for example via an internet network or Bluetooth communication systems or suchlike.

According to some embodiments, the user interface 16 can be produced on board the machine. In addition, or alternatively, there can also be provided a user interface 16 created on an electronic device 30 separate from the machine, such as a mobile phone of the smartphone type for example, a PC or a tablet on which a dedicated software application can be installed.

Thanks to the user interface 16, the user can create a bijective association between a container 20 and a certain profile of extraction parameters.

In particular, the user can create a bijective association between the type of coffee beans contained in a container and possibly also between the type of coffee beans and a respective set of extraction parameters.

Thanks to the fact that by means of the user interface 16 it is possible to define the bijective association between container and profile of the extraction parameters, a user can also have two distinct containers 20, containing the same type of coffee beans, each one associated with a different profile of extraction parameters. In this way, starting from the same type of coffee beans it is possible to have different extraction profiles according to the container 20 used on each occasion.

Furthermore, once the coffee beans present in a container 20 are finished, the latter can be refilled with the same or a different type of coffee beans. In the latter case, through the user interface 16 it is possible to create a new bijective association between container 20 and extraction parameters, and store this association in the memory unit 17.

According to some embodiments, when the identification means 24 identify a container 20 different from the previous one, a message can be displayed on the user interface 16 to ask a user whether or not he/she wants to proceed with a new association or not, or to confirm the association previously stored.

According to one aspect of the present invention, once at least the type of coffee beans has been defined, the respective extraction parameters of the machine 10 for that type of coffee beans can be determined automatically, on the basis of predefined profiles stored in the memory unit 17, 18, or possibly also entered manually by a user through the interface 16.

According to some embodiments, a plurality of profiles can be stored in the memory unit 17, 18, each one comprising a set of parameters of its own which are associated with a certain type of coffee beans or with a combination of variety/roasting of the coffee beans, for example single origin/clear, 100% Arabica/medium, etc. Such profiles can be created by a consumer, or provided by means of a software application, for example by respective coffee bean producers and/or resellers.

According to some embodiments, each set of parameters can comprise at least one extraction parameter chosen from: granulometry/grinding level of the coffee beans, quantity of coffee powder for a beverage, temperature of the brewing water, brewing time, flow rate of the brewing water, quantity of brewing water, brewing pressure, quantity of coffee beverage to be prepared, pre-brewing characteristics such as temperature and/or quantity of the pre-brewing water, pre-brewing time, or others.

According to other embodiments, each profile comprises a combination of two or more extraction parameters.

The set of parameters can also comprise expected values of one or more reference parameters, directly dependent on the extraction parameters set on each occasion, which, if respected, allow to obtain a quality beverage. The expected values can be compared with real values, detected during the delivery of a beverage by means of special detection devices, in order to perform a feedback control of the machine's 10 operation.

The reference parameters can be chosen between flow time, brewing time, or beverage delivery time, pressure in the brewing chamber, brewing temperature, speed/flow rate of the brewing water, quantity of water or beverage delivered, or others.

According to some embodiments, the control unit 15 can also be provided with processing means 19, for example comprising a neural network, configured to receive and process the commands received from a consumer through the user interface 16 during the use of a specific container 20, and to condition the operation of the machine 10 and/or adjust the operating parameters of the profile associated with that container 20 as a function of the commands received.

In this way, it is possible to associate a specific container 20, that is its identification means 24, not only with a certain type of beans, but also with a specific user.

According to some embodiments, the processing means 19 can be configured to adjust the parameters of the profile associated with the container 20 over time, on the basis of a self-learning process deriving from the commands received.

According to these embodiments, for a certain type of coffee beans it is therefore possible to store different profiles in the memory unit 17, which are possibly modified and stored according to the preferences of the consumer. In any case, the control unit 15 will on each occasion select the profile associated with the container 20 recognized by means of the respective identification means 24 and recognition means 14.

According to some embodiments, in addition or alternatively, the processing means 19 can be configured to update the user interface 16 so as to display on each occasion the preferred beverages selected when the container 20 currently in use is used, according to an order defined on the basis of the percentage and/or frequency of selection of a certain beverage with that container 20.

Also in this case, the user interface 16 is updated on the basis of a self-learning process deriving from the commands received. In this way, the operation of the machine 10, once a container 20 has been recognized, is adapted not only to the type of coffee beans contained in the container 20, but also to the specific preferences of a user.

Thanks to the cooperation between the identification means 24 and the recognition means 14, once a bijective correlation has been made between the coffee beans contained in a certain container 20 and the extraction parameters associated with them, each time the container 20 is replaced, the machine 10 can automatically and rapidly adapt its operating parameters without additional interventions by the user.

According to some embodiments, for example described with reference to figs. from 2 to 4, the identification means 24 and the recognition means 14 can be of the mechanical type.

According to this embodiment, the identification means 24 can comprise an activator member 25 associated with each container 20 and the recognition means 14 can comprise a plurality of actuator members 31, each one able to be activated by a certain activator member 25. The activation of the actuator member 31 causes an identification signal to be sent to the control unit 15.

By way of example, the actuator members 31 can be chosen from mechanical actuators, such as a microswitch for example, or from position sensors of the magnetic or Hall effect type.

Fig. 1 shows that the activator members 25 on the respective containers 20A, 20B, 20C are disposed in different positions with respect to the respective coupling members 22, so that each one cooperates with a respective actuator member 31.

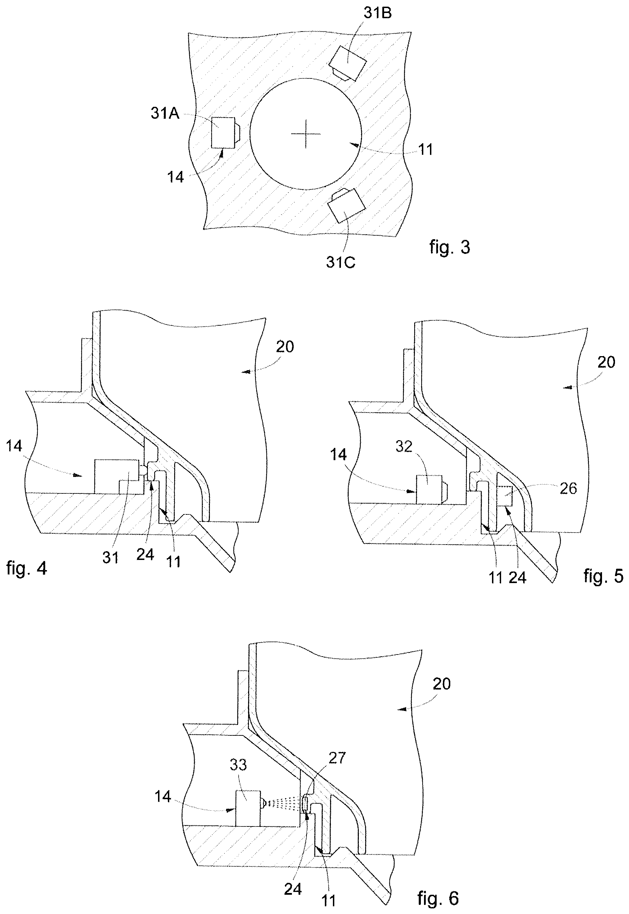

For example, fig. 3 shows three mechanical actuators, identified with the numbers 31A, 31B, 31C, disposed in different positions around the seating 11, each suitable to cooperate with a respective activator member 25 of a container 20A, 20B, 20C and transmit a signal of successful identification to the control unit 15.

The machine 10 can also comprise a different number of actuators 31, for example comprised between two and ten, as a function of their physical dimensions and the space available.

According to possible variants, it can also be provided that the actuators 31 are disposed aligned in a same position, possibly disposed at different heights from each other, and that the activator members 25 on each container 20A, 20B, 20C are also offset in height.

As shown by way of example in fig. 4, the activator member 25 can have the shape of a protruding flap, which, when the container 20 is inserted in the seating 11 and clamped therein, is positioned in alignment with a respective actuator 31 and interacts with it mechanically in such a way as to activate it and generate the identification signal.

According to variants described with reference to fig. 5, the identification means 24 and the recognition means 14 can comprise an emitter 26 and a receiver 32, or an antenna, respectively, suitable to communicate with each other wirelessly.

The emitter 26 and the receiver 31 can, for example, communicate by means of RFID (Radio Frequency Identification) or NFC (Near-Field Communication) technology.

For example, the emitter 26 can comprise a transponder, or tag, integrated in the container 20, preferably in a lower zone thereof, suitable to be inserted in the seating 11, and configured to emit its own identification signal when it is hit by a radiofrequency signal sent from the receiver 32.

According to this variant, it is possible to provide to recognize a substantially unlimited number of containers 20, since there is no physical limit that has to be respected; therefore this solution is particularly efficient and versatile. In this case, as a function of the identification of one or the other container 20A, 20B, 20C, the receiver 32 will give a different identification signal to the control unit 15.

According to other variants, it can be provided that there is a bar code or a QR code on each container 20, which act as identification means, and that there is a receiver in the seating 11 suitable to read such codes. This solution also substantially allows to recognize an unlimited number of containers 20.

According to other embodiments, for example described with reference to fig. 6, each container 20 can comprise at least one surface identification portion 27 having its own color and the recognition means 14 can comprise an optical device 33 suitable to recognize the color of such identification portion 27.

The present invention also concerns a method for preparing a coffee beverage comprising:
- making available a plurality of containers 20A, 20B, 20C of the removable type, each containing a type of coffee beans, and each provided with its own identification means 24;
- defining a bijective association between the containers 20A, 20B, 20C and respective profiles of extraction parameters of the machine 10 which are correlated at least to the type of coffee beans contained in each of the containers 20A, 20B, 20C;
- recognizing the container 20A, 20B, 20C used on each occasion by means of recognition means 14 suitable to interact with the identification means 24;
- automatically setting the operating parameters of the machine 10 as a function of the extraction parameters of the profile that is associated with each container 20A, 20B, 20C.

In this way, the machine 10 is automatically set with each replacement of the container 20A, 20B, 20C, without requiring other interventions by the user. In this way, thanks to the bijective association between at least the type of coffee beans/container, it is possible on each occasion to prepare a coffee beverage with the optimal extraction parameters, obtaining beverages that meet high quality requirements.

According to some embodiments, in order to recognize the container 20, the method according to the invention provides to receive a signal through one of a plurality of actuators 31, for example microswitches or position sensors, which is activated by an activator member 25 of a specific container 20 coupled to the machine 10 on each occasion.

According to one variant, the method provides to recognize the container 20A, 20B, 20C coupled to the machine 10 on each occasion by means of respective identification means 24 and recognition means 14 communicating with each other by means of RFID or NFC technology.

According to another variant, the method provides to recognize the container 20A, 20B, 20C used on each occasion by reading a bar code or a QR code disposed on the container 20A, 20B, 20C or on an identification portion 27 thereof, by means of an optical device 43 provided in the housing seating 11.

According to another variant, the method provides to recognize a container 20 by identifying a specific color of the container 20 or of an identification portion 27 thereof, by means of a suitable optical device 43.

According to another aspect of the invention, the step of bijective association between the container 20, and therefore its identification means 24, and a profile of extraction parameters provides to receive an indication of a type of coffee beans and possibly of their degree of roasting, and to select, from a plurality of stored extraction parameter profiles, the one associated with that type of coffee beans.

Once the bijective association has been defined between a certain container 20/type of coffee beans/extraction parameters, the method provides to store it in a memory unit 17 so as to make it available and accessible every time such container 20 is used and identified.

The user is therefore required to make only a preliminary association between each container 20A, 20B, 20C, or its identification means 24, and a type of coffee beans, and between the type of coffee beans and a profile of extraction parameters, and subsequently the machine 10 will automatically adapt the operating parameters as a function of the extraction parameters associated with the container 20A, 20B, 20C which is recognized on each occasion by the recognition means 14.

According to some embodiments, the method can also provide to receive and process the commands received from a consumer through the user interface 16 during the use of a specific container 20, and to condition the operation of the machine 10 and/or adjust the operating parameters of the profile associated with such container 20 as a function of the commands received.

According to some embodiments, the parameters of the profile associated with the container 20 can be adjusted over time on the basis of a self-learning process of the processing means 19.

For example, if during the use of a specific container 20 a user always selects a "strong" beverage, or modifies one or more parameters, the processing means 19 can define the operating parameters suitable to satisfy the user's preferences.

According to some embodiments, it can also be provided that on the basis of the data received and processed, the control unit 15 updates the user interface 16 as a function of the container 20 recognized on each occasion, so as to display on each occasion the preferred beverages selected when the container 20 currently in use is used.

For example, the processing means 19 can calculate the percentage and/or the frequency with which a particular beverage is chosen when each container is used, and update the user interface 16 on each occasion in order to display the beverages according to an order of preference. In this way, if when the container 20A is used the beverage normally chosen is a normal espresso, this beverage can be displayed as the first option to choose from when the container 20A is recognized, while if when the container 20B is used the beverage chosen more frequently is a cappuccino, this beverage will be offered as the first option and the espresso coffee can be in another position. The order in which the selection options are displayed can also be varied, on the basis of the commands received, also as a function of the days of the week and/or particular times of the day.

It is clear that modifications and/or additions of parts may be made to the machine 10 and to the method for preparing a beverage as described heretofore, without departing from the field and scope of the present invention, as defined by the claims.

It is also clear that, although the present invention has been described with reference to some specific examples, a person of skill in the art shall certainly be able to achieve many other equivalent forms of machine 10 and method for preparing a beverage, having the characteristics as set forth in the claims and hence all coming within the field of protection defined thereby.

In the following claims, the sole purpose of the references in brackets is to facilitate their reading and they must not be considered as restrictive factors with regard to the field of protection defined by the same claims.

## Claims

1. Machine (10) for preparing coffee beverages, comprising a plurality of containers (20, 20A, 20B, 20C) suitable to contain certain types of coffee beans, which can be selectively associated with a same housing seating (11) of said machine (10), wherein said containers (20, 20A, 20B, 20C) have their own identification means (24) and said machine (10) is provided with recognition means (14) configured to interact with said identification means (24) in order to supply a signal of successful identification of one of said containers (20, 20A, 20B, 20C) to a control unit (15) which is configured to regulate the operation of said machine (10), and with a user interface (16) communicating with said control unit (15), **characterized in that** said containers (20, 20A, 20B, 20C) are of the reusable type and are refillable with the same or a different type of coffee beans and said user interface (16) is configured to make a bijective association between each of said containers (20, 20A, 20B, 20C) and a certain profile of extraction parameters correlated to the type of coffee beans contained in the container to dynamically associate a specific profile with a specific container (20, 20A, 20B, 20C) on each occasion, wherein said association can be repeated and updated when the container is filled with a second type of coffee beans that differs from a first type, or to customize the extraction profile associated with the container, and
wherein said control unit (15) is configured to automatically select and set the operating parameters of the machine (10) on the basis of the profile of extraction parameters which is associated with the container (20, 20A, 20B, 20C) identified on each occasion.

2. Machine (10) as in claim 1, **characterized in that** it comprises a memory unit (17) in which a plurality of profiles is stored, each comprising its own set of extraction parameters which are associated with at least one certain type of coffee beans, and said user interface (16) is configured to make a bijective association between said containers (20, 20A, 20B, 20C) and the coffee beans present therein, and consequently with said extraction parameters.

3. Machine (10) as in claim 2, **characterized in that** information is stored in said memory unit (17) concerning the associations between container (20, 20A, 20B, 20C), type of coffee beans and respective extraction parameters.

4. Machine (10) as in any claim hereinbefore, **characterized in that** said identification means (24) and recognition means (14) are of the mechanical type and comprise an activator member (25) associated with each of said containers (20, 20A, 20B, 20C) and said recognition means (14) comprise a plurality of actuator members (31) which can be activated by said activator members (25).

5. Machine (10) as in claim 4, **characterized in that** said activator members (25) on said containers (20, 20A, 20B, 20C) are disposed in different positions with respect to each other in relation to the position of respective coupling members (22) which are configured to cooperate with mating coupling members (12) provided in said seating (21).

6. Machine (10) as in claim 4 or 5, **characterized in that** said actuator members (31) are selected from mechanical actuators such as microswitches, or from position sensors of the magnetic or Hall effect type.

7. Machine (10) as in any claim from 1 to 3, **characterized in that** said identification means (24) and recognition means (14) respectively comprise an emitter (26) and a receiver (32) suitable to communicate with each other in wireless mode, by means of RFID (Radio Frequency Identification) or NFC (Near-Field Communication) technology.

8. Machine (10) as in any claim from 1 to 3, **characterized in that** said identification means (24) comprise at least one surface identification portion (27) having its own color or its own bar code or QR code, and said recognition means (14) comprise an optical device (33) suitable to recognize said color or read said code at least on said identification portion (27).

9. Machine (10) as in any claim hereinbefore, **characterized in that** said control unit (15) is provided with processing means (19) configured to receive and process the commands received from a consumer by means of an interface (16) during the use of a specific container (20), in order to condition the operation of the machine (10) and/or adjust the parameters of the profile associated with said container (20) as a function of said commands received.

10. Method to prepare a coffee beverage which provides to:
- make available a plurality of containers (20, 20A, 20B, 20C) of the removable type, each having a certain type of coffee beans, and each provided with its own identification means (24), wherein said containers (20, 20A, 20B, 20C) are of the reusable type and are refillable with the same or a different type of coffee beans;
- define a bijective association by means of a user interface (16) between said containers (20, 20A, 20B, 20C) and a respective profile of extraction parameters of the machine (10), wherein said profile is correlated to the type of coffee beans contained to dynamically associate a specific profile with a specific container (20, 20A, 20B, 20C) on each occasion, wherein said association can be repeated and updated when the container is filled with a second type of coffee beans that differs from a first type, or to customize the extraction profile associated with the container;
- recognize said containers (20, 20A, 20B, 20C) used on each occasion by means of recognition means (14) that interact with said identification means (24);
- automatically select and set the operating parameters of said machine (10) as a function of the extraction parameters of the profile associated with the container (20, 20A, 20B, 20C) recognized on each occasion.

11. Method as in claim 10, **characterized in that** in order to recognize said containers (20, 20A, 20B, 20C), it receives an identification signal by means of one of a plurality of actuators (31) selected from microswitches or position sensors, activated on each occasion by an activator member (25) of a said container (20, 20A, 20B, 20C) when the latter is coupled to a housing seating (11) of said machine (10).

12. Method as in claim 11, **characterized in that** it recognizes said containers (20, 20A, 20B, 20C) used on each occasion by means of respective identification means (24) and recognition means (14) communicating with each other by means of RFID or NFC technology.

13. Method as in claim 11, **characterized in that** it recognizes said containers (20, 20A, 20B, 20C) used on each occasion by reading a bar code or a QR code disposed on an identification portion (27) of each of said containers (20, 20A, 20B, 20C), or by recognizing a color of said identification portion (27) by means of a receiver or an optical device (33) provided in a housing seating (11) of said machine (10).

14. Method as in one of the claims from 10 to 13, **characterized in that** the step of bijective association between one of said containers (20, 20A, 20B, 20C), and therefore its identification means (24), and a profile of extraction parameters provides to receive an indication of a type of coffee beans and possibly of their degree of roasting, and to select, from a plurality of stored extraction parameter profiles, the one associated with that type of coffee beans.

15. Method as in any claim from 10 to 14, **characterized in that** it provides to receive and process the commands received from a consumer by means of a user interface (16) during the use of a specific container (20) and to condition the operation of the machine (10) and/or adjust the operating parameters of the profile associated with such container (20) as a function of the commands received.

## Patentansprüche

1. Maschine (10) zur Zubereitung von Kaffeegetränken, umfassend eine Vielzahl von Behältern (20, 20A, 20B, 20C), die zur Aufnahme bestimmter Arten von Kaffeebohnen geeignet sind und die selektiv mit einer gleichen Gehäuseaufnahme (11) der Maschine (10) verbunden werden können, wobei die Behälter (20, 20A, 20B, 20C) über eigene Identifizierungsmittel (24) verfügen und die Maschine (10) mit Erkennungsmitteln (14) versehen ist, die so konfiguriert sind, dass sie mit den Identifizierungsmitteln (24) interagieren, um ein Signal der erfolgreichen Identifizierung eines der Behälter (20, 20A, 20B, 20C) an eine Steuereinheit (15) zu liefern, die so konfiguriert ist, dass sie den Betrieb der Maschine (10) steuert, und mit einer Benutzerschnittstelle (16) versehen ist, die mit der Steuereinheit (15) kommuniziert, **dadurch gekennzeichnet, dass** die Behälter (20, 20A, 20B, 20C) vom wiederverwendbaren Typ sind und mit der gleichen oder einer anderen Art von Kaffeebohnen befüllt werden können, und dass die Benutzerschnittstelle (16) so konfiguriert ist, dass sie eine bijektive Zuordnung zwischen jedem der Behälter (20, 20A, 20B, 20C) und einem bestimmten Profil von Extraktionsparametern, das mit der Art der in dem Behälter enthaltenen Kaffeebohnen korreliert, herstellen kann, um jeweils ein spezifisches Profil einem bestimmten Behälter (20, 20A, 20B, 20C) dynamisch zuzuordnen, wobei die Zuordnung wiederholt und aktualisiert werden kann, wenn der Behälter mit einer zweiten Art von Kaffeebohnen gefüllt wird, die sich von der ersten Art unterscheidet, und
wobei die Steuereinheit (15) so konfiguriert ist, dass sie die Betriebsparameter der Maschine (10) auf der Grundlage des Extraktionsparameterprofils, das dem jeweils identifizierten Behälter (20, 20A, 20B, 20C) zugeordnet ist, automatisch auswählt und einstellt.

2. Maschine (10) nach Anspruch 1, **dadurch gekennzeichnet, dass** sie eine Speichereinheit (17) umfasst, in der mehrere Profile gespeichert sind, die jeweils einen eigenen Satz von Extraktionsparametern umfassen, die mindestens einer bestimmten Art von Kaffeebohnen zugeordnet sind, und dass die Benutzerschnittstelle (16) so konfiguriert ist, dass sie eine bijektive Zuordnung zwischen den Behältern (20, 20A, 20B, 20C) und den darin vorhandenen Kaffeebohnen und folglich mit den Extraktionsparametern vornimmt.

3. Maschine (10) nach Anspruch 2, **dadurch gekennzeichnet, dass** in der Speichereinheit (17) Informationen über die Zuordnungen zwischen Behälter (20, 20A, 20B, 20C), Kaffeebohnenart und jeweiligen Extraktionsparametern gespeichert sind.

4. Maschine (10) nach irgendeinem der vorstehenden Ansprüche, **dadurch gekennzeichnet, dass** die Identifizierungsmittel (24) und Erkennungsmittel (14) mechanischer Art sind und ein Aktivierungselement (25) umfassen, das jedem der Behälter (20, 20A, 20B, 20C) zugeordnet ist, und die Erkennungsmittel (14) eine Vielzahl von Betätigungselementen (31) umfassen, die durch die Aktivierungselemente (25) aktiviert werden können.

5. Maschine (10) gemäß Anspruch 4, **dadurch gekennzeichnet, dass** die Aktivierungselemente (25) an den Behältern (20, 20A, 20B, 20C) in Bezug auf die Position jeweiliger Kupplungselemente (22), die so konfiguriert sind, dass sie mit in der Aufnahme (21) vorgesehenen Gegenkupplungselementen (12) zusammenwirken, in unterschiedlichen Positionen zueinander angeordnet sind.

6. Maschine (10) nach Anspruch 4 oder 5, **dadurch gekennzeichnet, dass** die Betätigungselemente (31) aus mechanischen Betätigungselementen, wie zum Beispiel Mikroschaltern, oder aus Positionssensoren vom magnetischen oder Hall-Effekt-Typ ausgewählt sind.

7. Maschine (10) nach irgendeinem der Ansprüche 1 bis 3, **dadurch gekennzeichnet, dass** die Identifizierungsmittel (24) und die Erkennungsmittel (14) einen Sender (26) bzw. einen Empfänger (32) umfassen, die geeignet sind, miteinander im drahtlosen Modus mittels RFID- (Radio Frequency Identification) oder NFC- (Near-Field Communication) Technologie zu kommunizieren.

8. Maschine (10) gemäß irgendeinem der Ansprüche 1 bis 3, **dadurch gekennzeichnet, dass** die Identifizierungsmittel (24) mindestens einen Oberflächenidentifizierungsabschnitt (27) mit einer eigenen Farbe oder einem eigenen Barcode oder QR-Code umfassen, und die Erkennungsmittel (14) eine optische Vorrichtung (33) umfassen, die geeignet ist, die Farbe zu erkennen oder den Code zumindest auf dem Identifizierungsabschnitt (27) zu lesen.

9. Maschine (10) gemäß irgendeinem der vorstehenden Ansprüche, **dadurch gekennzeichnet, dass** die Steuereinheit (15) mit Verarbeitungsmitteln (19) versehen ist, die so konfiguriert sind, dass sie die Befehle empfangen und verarbeiten, die während der Verwendung eines bestimmten Behälters (20) von einem Benutzer über eine Schnittstelle (16) empfangen werden, um den Betrieb der Maschine (10) zu konditionieren und/oder die Parameter des dem Behälter (20) zugeordneten Profils in Abhängigkeit von den empfangenen Befehlen einzustellen.

10. Verfahren zur Zubereitung eines Kaffeegetränks, das Folgendes vorsieht:
- Bereitstellen einer Vielzahl von Behältern (20, 20A, 20B, 20C) vom entfernbaren Typ, die jeweils eine bestimmte Art von Kaffeebohnen enthalten und jeweils mit eigenen Identifizierungsmitteln (24) versehen sind, wobei die Behälter (20, 20A, 20B, 20C) vom wiederverwendbaren Typ sind und mit der gleichen oder einer anderen Art von Kaffeebohnen wieder befüllt werden können;
- Definieren einer bijektiven Zuordnung zwischen den Behältern (20, 20A, 20B, 20C) und einem jeweiligen Profil von Extraktionsparametern der Maschine (10) mittels einer Benutzerschnittstelle (16), wobei das Profil mit der Art der enthaltenen Kaffeebohnen korreliert ist, um jeweils ein spezifisches Profil einem bestimmten Behälter (20, 20A, 20B, 20C) dynamisch zuzuordnen, wobei die Zuordnung wiederholt und aktualisiert werden kann, wenn der Behälter mit einer zweiten Art von Kaffeebohnen befüllt wird, die sich von der ersten Art unterscheidet, oder um das dem Behälter zugeordnete Extraktionsprofil individuell anzupassen;
- Erkennen der jeweils verwendeten Behälter (20, 20A, 20B, 20C) mittels Erkennungsmitteln (14), die mit den Identifizierungsmitteln (24) zusammenwirken;
- automatisches Auswählen und Einstellen der Betriebsparameter der Maschine (10) in Abhängigkeit von dem Extraktionsparameterprofil, das dem jeweils erkannten Behälter (20, 20A, 20B, 20C) zugeordnet ist.

11. Verfahren nach Anspruch 10, **dadurch gekennzeichnet, dass** zur Erkennung der Behälter (20, 20A, 20B, 20C) ein Identifikationssignal mittels eines von einer Vielzahl von aus Mikroschaltern oder Positionssensoren ausgewählten Aktuatoren (31), die jeweils durch ein Aktivierungselement (25) eines der Behälter (20, 20A, 20B, 20C) aktiviert werden, empfangen wird, wenn dieser mit einer Gehäuseaufnahme (11) der Maschine (10) verbunden ist.

12. Verfahren nach Anspruch 11, **dadurch gekennzeichnet, dass** die jeweils verwendeten Behälter (20, 20A, 20B, 20C) mittels entsprechender Identifizierungsmittel (24) und Erkennungsmittel (14), die über RFID- oder NFC-Technologie miteinander kommunizieren, erkannt werden.

13. Verfahren nach Anspruch 11, **dadurch gekennzeichnet, dass** die jeweils verwendeten Behälter (20, 20A, 20B, 20C) erkannt werden, indem ein Barcode oder ein QR-Code gelesen wird, der auf einem Identifikationsabschnitt (27) jedes der Behälter (20, 20A, 20B, 20C) angebracht ist, oder indem eine Farbe des Identifikationsabschnitts (27) mittels eines Empfängers oder einer optischen Vorrichtung (33), die in einer Gehäuseaufnahme (11) der Maschine (10) vorgesehen ist, erkannt wird.

14. Verfahren nach irgendeinem der Ansprüche 10 bis 13, **dadurch gekennzeichnet, dass** in dem Schritt der bijektiven Zuordnung zwischen einem der Behälter (20, 20A, 20B, 20C) und somit dessen Identifizierungsmitteln (24) und einem Profil von Extraktionsparametern eine Angabe einer Kaffeebohnenart und gegebenenfalls ihres Röstgrades empfangen wird und aus einer Vielzahl von gespeicherten Extraktionsparameterprofilen dasjenige ausgewählt wird, das dieser Kaffeebohnenart zugeordnet ist.

15. Verfahren nach irgendeinem der Ansprüche 10 bis 14, **dadurch gekennzeichnet, dass** es vorsieht, die von einem Benutzer über eine Benutzerschnittstelle (16) während der Verwendung eines bestimmten Behälters (20) empfangenen Befehle zu empfangen und zu verarbeiten und den Betrieb der Maschine (10) zu konditionieren und/oder die Betriebsparameter des diesem Behälter (20) zugeordneten Profils in Abhängigkeit von den empfangenen Befehlen einzustellen.

## Revendications

1. Machine (10) pour préparer des boissons au café, comprenant une pluralité de récipients (20, 20A, 20B, 20C) adaptés pour contenir certains types de grains de café, qui peuvent être associés sélectivement à un même siège de logement (11) de ladite machine (10), dans laquelle lesdits récipients (20, 20A, 20B, 20C) ont leurs propres moyens d'identification (24) et ladite machine (10) est pourvue de moyens de reconnaissance (14) configurés pour interagir avec lesdits moyens d'identification (24) afin de fournir un signal d'identification réussie de l'un desdits récipients (20, 20A, 20B, 20C) à une unité de commande (15) qui est configurée pour réguler le fonctionnement de ladite machine (10), et avec une interface utilisateur (16) communiquant avec ladite unité de commande (15), **caractérisée en ce que** lesdits récipients (20, 20A, 20B, 20C) sont du type réutilisable et sont rechargeables avec le même type ou un type différent de grains de café et ladite interface utilisateur (16) est configurée pour établir une association bijective entre chacun desdits récipients (20, 20A, 20B, 20C) et un certain profil de paramètres d'extraction corrélés au type de grains de café contenus dans le récipient pour associer dynamiquement un profil spécifique à un récipient spécifique (20, 20A, 20B, 20C) à chaque fois, ladite association pouvant être répétée et mise à jour lorsque le récipient est rempli d'un second type de grains de café qui diffère d'un premier type, ou pour personnaliser le profil d'extraction associé au récipient, et
dans lequel ladite unité de commande (15) est configurée pour sélectionner et définir automatiquement les paramètres de fonctionnement de la machine (10) sur la base du profil des paramètres d'extraction qui est associé au récipient (20, 20A, 20B, 20C) identifié à chaque fois.

2. Machine (10) selon la revendication 1, **caractérisée en ce qu'**elle comprend une unité de mémoire (17) dans laquelle une pluralité de profils est stockée, chacun comprenant son propre ensemble de paramètres d'extraction qui sont associés à au moins un certain type de grains de café, et ladite interface utilisateur (16) est configurée pour établir une association bijective entre lesdits récipients (20, 20A, 20B, 20C) et les grains de café présents dans ceux-ci, et par conséquent avec lesdits paramètres d'extraction.

3. Machine (10) selon la revendication 2, **caractérisée en ce que** des informations sont stockées dans ladite unité de mémoire (17) concernant les associations entre le récipient (20, 20A, 20B, 20C), le type de grains de café et les paramètres d'extraction respectifs.

4. Machine (10) selon l'une quelconque des revendications précédentes, **caractérisée en ce que** lesdits moyens d'identification (24) et moyens de reconnaissance (14) sont du type mécanique et comprennent un élément d'activation (25) associé à chacun desdits récipients (20, 20A, 20B, 20C) et lesdits moyens de reconnaissance (14) comprennent une pluralité d'éléments d'actionnement (31) qui peuvent être activés par lesdits éléments d'activation (25).

5. Machine (10) selon la revendication 4, **caractérisée en ce que** lesdits éléments d'activation (25) sur lesdits récipients (20, 20A, 20B, 20C) sont disposés dans des positions différentes les uns par rapport aux autres par rapport à la position des éléments de couplage respectifs (22) qui sont configurés pour coopérer avec des éléments de couplage correspondants (12) prévus dans ledit siège (21).

6. Machine (10) selon la revendication 4 ou 5, **caractérisée en ce que** lesdits éléments d'actionnement (31) sont sélectionnés parmi des actionneurs mécaniques tels que des microrupteurs, ou parmi des capteurs de position du type magnétique ou à effet Hall.

7. Machine (10) selon l'une quelconque des revendications 1 à 3, **caractérisée en ce que** lesdits moyens d'identification (24) et moyens de reconnaissance (14) comprennent respectivement un émetteur (26) et un récepteur (32) adaptés pour communiquer entre eux en mode sans fil, au moyen de la technologie RFID (identification par radiofréquence) ou NFC (communication en champ proche).

8. Machine (10) selon l'une quelconque des revendications 1 à 3, **caractérisée en ce que** lesdits moyens d'identification (24) comprennent au moins une partie d'identification de surface (27) ayant sa propre couleur ou son propre code à barres ou code QR, et lesdits moyens de reconnaissance (14) comprennent un dispositif optique (33) approprié pour reconnaître ladite couleur ou lire ledit code au moins sur ladite partie d'identification (27).

9. Machine (10) selon l'une quelconque des revendications précédentes, **caractérisée en ce que** ladite unité de commande (15) est pourvue de moyens de traitement (19) configurés pour recevoir et traiter les commandes reçues d'un consommateur au moyen d'une interface (16) pendant l'utilisation d'un récipient spécifique (20), afin de conditionner le fonctionnement de la machine (10) et/ou d'ajuster les paramètres du profil associé audit récipient (20) en fonction desdites commandes reçues.

10. Procédé de préparation d'une boisson au café qui permet de :
- mettre à disposition une pluralité de récipients (20, 20A, 20B, 20C) du type amovible, chacun ayant un certain type de grains de café, et chacun étant pourvu de ses propres moyens d'identification (24), dans lequel lesdits récipients (20, 20A, 20B, 20C) sont du type réutilisable et sont rechargeables avec le même type de grains de café ou un type différent ;
- définir une association bijective au moyen d'une interface utilisateur (16) entre lesdits récipients (20, 20A, 20B, 20C) et un profil respectif de paramètres d'extraction de la machine (10), dans lequel ledit profil est corrélé au type de grains de café contenus pour associer dynamiquement un profil spécifique à un récipient spécifique (20, 20A, 20B, 20C) à chaque fois, dans lequel ladite association peut être répétée et mise à jour lorsque le récipient est rempli d'un second type de grains de café qui diffère d'un premier type, ou pour personnaliser le profil d'extraction associé au récipient ;
- reconnaître lesdits récipients (20, 20A, 20B, 20C) utilisés à chaque fois au moyen de moyens de reconnaissance (14) qui interagissent avec lesdits moyens d'identification (24) ;
- sélectionner et régler automatiquement les paramètres de fonctionnement de ladite machine (10) en fonction des paramètres d'extraction du profil associé au récipient (20, 20A, 20B, 20C) reconnus à chaque fois.

11. Procédé selon la revendication 10, **caractérisé en ce que** pour reconnaître lesdits récipients (20, 20A, 20B, 20C), il reçoit un signal d'identification au moyen de l'un d'une pluralité d'actionneurs (31) sélectionnés parmi des microrupteurs ou des capteurs de position, activés à chaque fois par un élément d'activation (25) dudit récipient (20, 20A, 20B, 20C) lorsque ce dernier est couplé à un siège de boîtier (11) de ladite machine (10).

12. Procédé selon la revendication 11, **caractérisé en ce qu'**il reconnaît lesdits récipients (20, 20A, 20B, 20C) utilisés à chaque fois au moyen de moyens d'identification respectifs (24) et de moyens de reconnaissance (14) communiquant entre eux au moyen de la technologie RFID ou NFC.

13. Procédé selon la revendication 11, **caractérisé en ce qu'**il reconnaît lesdits récipients (20, 20A, 20B, 20C) utilisés à chaque fois en lisant un code à barres ou un code QR disposé sur une partie d'identification (27) de chacun desdits récipients (20, 20A, 20B, 20C), ou en reconnaissant une couleur de ladite partie d'identification (27) au moyen d'un récepteur ou d'un dispositif optique (33) disposé dans un siège de boîtier (11) de ladite machine (10).

14. Procédé selon l'une des revendications 10 à 13, **caractérisé en ce que** l'étape d'association bijective entre l'un desdits récipients (20, 20A, 20B, 20C), et par conséquent ses moyens d'identification (24), et un profil de paramètres d'extraction permet de recevoir une indication d'un type de grains de café et éventuellement de leur degré de torréfaction, et de sélectionner, parmi une pluralité de profils de paramètres d'extraction stockés, celui associé à ce type de grains de café.

15. Procédé selon l'une quelconque des revendications 10 à 14, **caractérisé en ce qu'**il prévoit de recevoir et de traiter les commandes reçues d'un consommateur au moyen d'une interface utilisateur (16) pendant l'utilisation d'un récipient spécifique (20) et de conditionner le fonctionnement de la machine (10) et/ou d'ajuster les paramètres de fonctionnement du profil associé à ce récipient (20) en fonction des commandes reçues.
